# DEMANDE DE BREVET EUROPEEN

(11) **EP 1 935 236 A1**
(43) Date de publication de la demande: **25.06.2008**
(21) Numéro de dépôt: 06292007.9
(22) Date de dépôt: 21.12.2006
(51) Int. Cl.: A01K 1/03

(54) **Systeme de suivi de parametres de confinement d'animaux de laboratoire, en particulier pendant leur transport, et cage de confinement des animaux**

(71) Demandeur: Sanivia, 28480 Vicheres (FR)
(72) Inventeur: Azadian, Pascal, 75014 Paris (FR); Potier, Luc, 92350 Le Plessis Robinson (FR)
(74) Mandataire: Bolinches, Michel Jean-Marie

(57) **Abrégé**

L'objectif de la présente invention est de fournir un système de suivi et, avantageusement, de commande des paramètres de confinement, précis, économe en énergie, adapté aux besoins réels des animaux et qui permet, le cas échéant, d'établir un protocole d'acclimatation approprié aux conditions de transport subies par les animaux de chaque cage. L'invention concerne également une cage de confinement d'animaux adapté à un tel système.

A cette fin, le système de suivi des paramètres de confinement d'animaux de laboratoire enfermés dans au moins une cage (104) selon l'invention comprend un moyen de commande (11) relié à au moins un émetteur/récepteur (12) pour établir une communication (13) avec au moins un capteur (110) disposé dans chaque cage et transmettre des mesures de conditions de confinement (16, 17) des animaux à au moins une mémoire de stockage (14, 15) de ces conditions de confinement (14).

## Description

L'invention se rapporte à une cage de confinement d'animaux de laboratoire, et à un système de suivi des paramètres de confinement des animaux, en particulier pendant leur transport.

L'évolution récente de la Recherche a permis la modification génétique des animaux de laboratoire pour permettre de répliquer de façon la plus fidèle possible, les symptômes et caractéristiques des maladies humaines étudiées. Traditionnellement, les animaux de laboratoire utilisés dans le cadre de ces recherches sont le plus souvent des rats, des souris, des lapins et des cobayes.

Les modifications génétiques pratiquées et les opérations de clonage permettant d'aboutir à des lignées d'animaux intéressantes pour la Recherche conduisent à augmenter notablement le prix de ces animaux, mais aussi à fragiliser ces animaux.

Les laboratoires dans lesquels ces animaux sont étudiés sont donc de plus en plus vigilants quant à la qualité des traitements et à l'hygiène de leur environnement, outre le respect de réglementations de plus en plus rigoureuses.

Or, les systèmes de suivi de qualité et d'hygiène sont coûteux en énergie. En effet, pour déterminer la fréquence des renouvellements d'air dans des cages dans lesquels sont confinés les animaux, il est nécessaire de déterminer les conditions de stockages dans la pièce du laboratoire. Pour que ces conditions soient connues, il convient de les réguler constamment. Ainsi, la température des pièces de stockage est généralement contrôlée par un climatiseur, coûteux en énergie, qui peut maintenir en outre une hygrométrie déterminée. Une fois ces paramètres régulés, une fréquence des renouvellements d'air est programmée. Cette fréquence ne peut donc pas s'adapter automatiquement à un changement inopiné des conditions de stockage. En outre, par sécurité, la fréquence de renouvellement d'air est généralement supérieure à la fréquence nécessaire.

Enfin, les conditions de stockages sont déterminées de façon globale par rapport à la pièce alors que chaque cage, en fonction de sa localisation spatiale dans la pièce rencontre des conditions de stockage qui lui sont propres (lumière, qualité d'air, température, nombre d'animaux dans chaque cage, etc.). Avec les systèmes précédents, certaines cages *peuvent* recevoir trop d'air alors que d'autres n'en reçoivent pas assez.

L'invention vise à pallier ces inconvénients. Pour ce faire, l'invention prévoit une commande à distance d'un capteur par cage et de stocker les informations transmises par les capteurs.

Plus précisément, l'invention se rapporte à un système de suivi des paramètres de confinement d'animaux de laboratoire enfermés dans au moins une cage, et comprenant un moyen de commande relié à au moins un émetteur/récepteur pour établir une communication avec chaque capteur disposé dans chaque cage et transmettre des mesures de conditions de confinement des animaux à au moins une mémoire de stockage de ces conditions de confinement.

Les moyens de communication entre l'émetteur et le récepteur peuvent être sans support physique (par ondes hertziennes, infrarouges ou autres) ou sur supports (fibres optiques, câbles, ...).

Selon des formes de réalisation particulières :
- le système peut comprendre une mémoire de stockage de valeurs seuil de conditions de confinement ;
- le moyen de commande peut être relié en outre à au moins une alarme de dépassement de valeur seuil.
- le moyen de commande peut être apte à commander la mise en marche ou l'arrêt d'une pompe à air lorsque des mesures communiquées par les capteurs se trouvent en dessous ou au-dessus d'au moins une valeur seuil prédéfinie ;
- le système peut comprendre, en outre, un humidificateur d'air et/ou un régulateur de température d'air pour ajuster l'humidité et/ou la température de l'air en fonction de mesures communiquées par les capteurs des cages ;
- le système peut être muni d'un circuit d'aération comprenant au moins un circuit d'air pulsé connecté à au moins une pompe à air et pourvu d'au moins un moyen de connexion à au moins une cage selon l'invention pour apporter de l'air dans chaque cage, et au moins un circuit d'extraction d'air muni de moyens de connexion audites cages pour évacuer de l'air hors de ces cages, en nombre identique à celui des moyens de connexion du circuit d'air pulsé ;
- au moins un moyen de connexion du circuit d'air pulsé peut présenter un moyen d'obturation au moins partielle de l'arrivée d'air contrôlable par le moyen de commande en fonction de mesures communiquées par le capteur de la cage correspondant à chacun de ces moyens de connexion ;
- l'émetteur/récepteur peut être pris dans le groupe constitué par les émetteurs/récepteurs NFC, les émetteurs/récepteurs infrarouges, les émetteurs/récepteurs WiFi, et les émetteurs/récepteurs Bluetooth ;
- le système peut comprendre, en outre, au moins une interface de lecture/écriture reliée au moyen de commande pour transmettre les valeurs des conditions de confinement mesurées effectivement subies par les animaux à la mémoire de stockage des ces valeurs ;
- l'interface de lecture/écriture peut recevoir des valeurs seuil relatives à des conditions de confinement à maintenir lors du stockage et/ou du transport et les transmet via le moyen de commande à la mémoire de stockage des valeurs seuil; et/ou
- l'interface de lecture/écriture peut être prise dans le groupe constitué par les lecteurs/enregistreurs de carte à puce, les lecteurs/enregistreurs de carte magnétique, les prises USB, les lecteurs/enregistreurs de disque optique, les lecteurs/enregistreurs de disque magnétique, les lecteurs/imprimeurs de code barre, les émetteurs/récepteurs NFC, les émetteurs/récepteurs infrarouges, les émetteurs/récepteurs WiFi, et les émetteurs/récepteurs Bluetooth.

Les problèmes de suivi, et avantageusement de maintien, des animaux de laboratoire en cage dans des conditions de confinement déterminées deviennent critiques lorsque ces animaux sont transportés d'un laboratoire à un autre. Or, les systèmes connus ne conviennent pas pour être utilisés dans un véhicule de transport.

En effet, lors d'une étape de transport d'animaux de laboratoire en cage, les conditions de stockage peuvent changer rapidement au cours du trajet. D'autre part, les ressources énergétiques des véhicules de transport sont coûteuses et limitées.

Actuellement, pour expédier des animaux vers un laboratoire récipiendaire, le laboratoire expéditeur conserve les cages de confinement, compte tenu de leur coût élevé, en ayant transféré les animaux depuis les cages où ils vivaient protégés par des contraintes sanitaires strictes, dans des boîtes, souvent en carton renforcé, dans lesquelles se trouvent de la nourriture hydratée et de la litière pour le voyage, et dans lesquelles sont ménagées des ouvertures (éventuellement agrémentés de filtres) pour laisser passer l'air.

A l'arrivée au laboratoire récipiendaire, les animaux sont sortis de leur boîte pour être placés à nouveau dans des cages de confinement dans un système de ventilation du type précédemment décrit, et fréquemment mis en quarantaine pour éliminer les animaux malades car les laboratoires sont conscients des aléas sanitaires rencontrés pendant les transports qui, aujourd'hui, ne comportent pas de système réellement sécurisé.

La quarantaine est également utile pour acclimater, calmer et déstresser les animaux qui ont subi de nombreux traumatismes : chocs dus au transport ou à l'entassement des boîtes à l'arrière d'un véhicule, écarts de température, air vicié, obscurité, bruit, vibrations, etc.

L'ensemble de ces traumatismes et risques sanitaires ont d'autant plus d'effet que le transport dure longtemps. Il peut arriver que les animaux passent une nuit dans le véhicule sans soins particuliers, et soient livrés le lendemain.

Malgré des protocoles stricts d'acclimatation, beaucoup de pertes peuvent être pourtant enregistrées après les transports.

Une solution consiste à adapter le moyen de transport aux systèmes existants de stockage des cages pour reproduire les conditions de stockage du laboratoire, par exemple, en prévoyant une isolation et une régulation thermique et en supprimant toute entrée d'air susceptible de créer des courants d'air. Ainsi, une fréquence des renouvellements d'air sera déterminée en fonction du moyen de transport.

Mais une telle solution ne résout pas les problèmes de suivi et, avantageusement, de commande des changements des conditions de stockage et des dépenses énergétiques, en particulier lors du transport.

Le document US 6,463,397 propose d'asservir le système de ventilation d'air pulsé et expulsé à un dispositif de suivi relié à une cage test. Cette cage test contient un détecteur Venturi du flux d'air circulant à l'intérieur de la cage, mais ne renferme aucun animal, d'une part pour la sécurité de l'animal et, d'autre part, pour protéger le système de commande et de surveillance du niveau de flux d'air de la cage test. En outre, ce document de brevet ne porte que sur des systèmes fixes au sein des animaleries et non sur des systèmes transportables.

Un tel système présente plusieurs inconvénients. Il est nécessaire de prévoir de la place pour la cage test. De plus, en raison des pertes de charges induites par le réseau de conduits du circuit de ventilation d'air pulsé, le flux d'air circulant dans la cage test dépend de la place de cette cage sur le portoir. Cette mesure n'est donc pas représentative de chaque cage, mais constitue une valeur indicative moyenne du flux circulant dans les cages. Pour améliorer ce système, il faudrait augmenter le nombre de cages test, ce qui entraînerait une perte de place importante. Ce défaut est d'autant plus rédhibitoire lorsqu'il s'agit d'adapter ce système au transport des animaux car cela augmente significativement les coûts des transports. Ce brevet d'ailleurs ne décrit pas d'adaptation à des véhicules de transport. Il ne peut donc pas s'appliquer au transport d'animaux, et encore moins au transport d'animaux fragilisés par des modifications génétiques.

Ce système ne permet donc pas de suivre les conditions de confinement nécessaires aux animaux de chaque cage, ni d'adapter un protocole d'acclimatation aux conditions de transport.

Un autre aspect de la présente invention est donc de fournir un système de suivi et, avantageusement, de commande des paramètres de confinement, adaptable au transport d'animaux pour permettre, avantageusement, d'établir un protocole d'acclimatation approprié aux conditions de transport subies par les animaux de chaque cage.

A cette fin, l'invention concerne également un système de suivi tel que décrit précédemment et adapté au transport d'animaux de laboratoire. Selon des formes de réalisation particulières :
- le système peut comprendre, en outre, au moins un module d'analyse des valeurs des conditions de confinement mesurées effectivement subies par les animaux lors d'un transport apte à adapter les conditions de confinement de stockage après le transport ;
- le système peut comprendre, en outre, un portoir rigide muni de moyens de suspension destinés à supporter les cages de manière à les protéger des vibrations et roulis induits par le transport ;
- les moyens de suspension peuvent être réglables en fonction du poids de la cage ;
- chaque moyen de connexion des circuits d'air pulsé et évacué aux cages peut être muni d'un moyen d'absorption de vibration ;
- au moins un moyen de connexion des circuits d'air pulsé et évacué aux cages peut comprendre une portion de tube souple étanche fixée à une prise rigide de connexion au circuit d'air et à une prise rigide de connexion à la cage ; et/ou
- la portion de tube souple peut être prise dans le groupe constitué par un tube ondulé, un tube en polymère élastique sensiblement étanche, et un tuyau constitué par la combinaison d'un tube métallique ondulé recouvert d'une tresse claire, elle-même recouverte d'une gaine en polymère élastique tel que du néoprène, du PVC ou du caoutchouc.

Les animaux peuvent être confinés et transportés en cages en matière plastique transparente reliées à un système de ventilation d'air pulsé et expulsé par des buses de connexion (les portoirs ventilés). Ces cages peuvent être étanches à l'air et à l'humidité ou présenter une ouverture munie d'un filtre de type HEPA (initiales de High Efficiency Particulate Air, c'est-à-dire filtre haute efficacité pour les particules de l'air ; un filtre HEPA arrête plus de 99,9% des particules, jusqu'à une taille de 0,3 µm).

Lorsque les animaux ne présentent pas de fragilité ou de danger sanitaire particulier, les cages peuvent aussi être de simples boîtes en carton, éventuellement renforcées par un grillage. Dans ce cas, la pièce de stockage des cages comprend un système de ventilation qui renouvelle l'air de la pièce de façon régulière et programmée en fonction, notamment, du volume de la pièce de stockage, de la température et de la qualité de l'air, et/ou de l'hygrométrie qui y règne.

Ainsi, les cages de ces systèmes ne sont pas adaptées pour connaître les conditions précises de confinement des animaux au cours d'un intervalle de temps donné. En outre, ces systèmes conduisent à une dépense importante d'énergie tout en étant incapables de réagir de manière adaptée à un changement des conditions de confinement.

Un objectif de la présente invention est donc de fournir une cage de confinement d'animaux pour permettre un suivi et, avantageusement, une commande des paramètres de confinement, précis, économe en énergie et adapté aux besoins réels des animaux.

Pour ce faire, l'invention prévoit notamment de capter les conditions de confinement dans chaque cage, de manière à empêcher les animaux d'avoir un contact nuisible avec le capteur.

A cet effet, l'invention a également pour objet une cage de confinement d'animaux de laboratoire comprenant un bac et un couvercle, comprenant en outre un moyen de protection formant écran agencé pour définir une distance de protection minimale définie entre les animaux et au moins un capteur de conditions de confinement des animaux.

Selon des formes de réalisation particulières :
- la cage de confinement peut comprendre un support destiné à recevoir le capteur et agencé pour que le capteur soit à une distance de protection minimale déterminée des animaux contenus dans la cage et protégé de tout contact avec eux ;
- la cage de confinement peut comprendre un compartiment de stockage des animaux et un compartiment de stockage de la nourriture séparé du compartiment de stockage des animaux par une grille, et dans laquelle le capteur est maintenu en suspension dans le compartiment de stockage de la nourriture ;
- le support peut être séparé de l'air extérieur par un sas agencé pour isoler l'air contenu dans la cage de l'air extérieur lors de l'introduction ou du retrait du capteur dans ou hors du support ;
- le support peut comprendre un réceptacle creux comprenant un filtre, par exemple de type HEPA, et un moyen de fermeture du réceptacle ;
- la cage de confinement peut comprendre une grille agencée pour que le capteur soit à une distance de protection minimale déterminée des animaux contenus dans la cage et protégé de tout contact avec eux ;
- le couvercle peut être muni de prises de connexion avec un moyen de connexion à un circuit d'aération ;
- chaque capteur peut être en matériau pouvant résister aux diverses techniques d'aseptie: autoclave ou autres moyens physiques (rayonnement ionisant, ...) ou chimiques (eau de javel, ...).

D'autres caractéristiques de l'invention seront énoncées dans la description détaillée ci-après faite en référence aux figures annexées, données à titre d'exemple, et qui représentent, respectivement:
- la figure 1, une vue en perspective d'une cage munie d'un capteur de conditions de confinement ;
- la figure 2, une vue en coupe d'une variante de la cage de la figure 1 ;
- la figure 3, une vue en coupe d'une variante de cage selon l'invention.
- la figure 4, un schéma de fonctionnement d'un premier mode de réalisation d'un système de suivi des paramètres de confinement d'animaux de laboratoire selon l'invention ;
- la figure 5, un schéma de fonctionnement d'un deuxième mode de réalisation d'un système de suivi des paramètres de confinement d'animaux de laboratoire selon l'invention ;
- la figure 6, une vue en coupe de six cages selon l'invention disposées sur un portoir de transport ;
- la figure 7, une vue en plan d'un moyen de connexion souple au circuit de ventilation ; et
- la figure 8, une vue en coupe d'un moyen de connexion souple selon l'invention, muni d'un moyen d'occultation au moins partielle du circuit de ventilation.

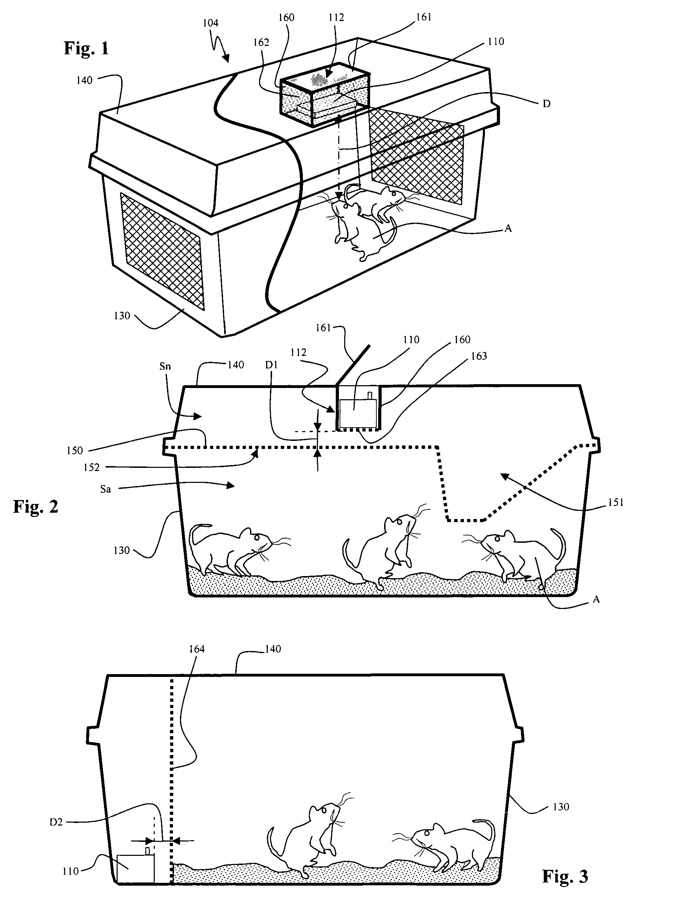

Le détail d'une cage 104 selon l'invention est représenté dans les figures 1, 2 et 3.

Dans les figures 1 et 2, la cage 104 comprend un bac 130, un couvercle 140, un capteur 110 de conditions de confinement des animaux A et un moyen de protection 112 formant écran agencé pour définir une distance de protection minimale D entre les animaux A et le capteur 110.

Le moyen de protection 112 est un support destiné à recevoir le capteur et agencé pour que celui-ci soit à une distance de protection minimale déterminée D des animaux A contenus dans la cage 104 et protégé de tout contact avec eux, même s'il se dressent sur leurs pattes ou qu'ils grimpent les uns sur les autres.

Sur les figures 1 et 2, le support 112 est constitué par une structure rigide 160 définissant un réceptacle creux. Dans la figure 1, le réceptacle creux a une forme de parallélépipède dont toutes les faces, à l'exception du couvercle 161, sont vides et recouvertes par un filtre 162 de type HEPA. De cette manière, il est possible d'ouvrir le couvercle 161 pour placer un capteur 110 dans le support 112 sans crainte de contamination des animaux. Ainsi, le capteur se trouve au sein de la cage 104 sans risque d'être perturbé dans ses mesures ni dégradé ou endommagé par les animaux A.

Dans la figure 2, seule la face 163 sur laquelle repose le capteur 110 est constituée par un filtre, par exemple de type HEPA.

Il est nécessaire que le support présente une structure permettant au capteur de mesurer efficacement les conditions de confinement. A cette fin, au moins l'une des faces peut présenter, par exemple, au moins une ouverture, voire être complètement vide (sans matière), mais il est préférable que ces ouvertures soient recouvertes d'un filtre. Dans un autre mode de réalisation non représenté, le support 112 est séparé de l'air extérieur par un sas agencé pour isoler l'air contenu dans la cage de l'air extérieur lors de l'introduction ou du retrait du capteur 110 dans ou hors du support 112.

Dans la variante de réalisation représentée dans la figure 2, une grille 150 est placée entre le bac 130 et le couvercle 140. Elle présente une partie 151 formant une mangeoire et une partie de protection 152 destinée à empêcher les animaux A de grimper dans la mangeoire 151. La cage comprend donc un compartiment de stockage Sa des animaux et un compartiment de stockage Sn de la nourriture séparé du compartiment de stockage Sa des animaux par la grille 150.

La grille est un moyen de protection formant écran supplémentaire agencé pour définir une distance de protection minimale D1 entre les animaux A et le capteur 110 disposé dans le support 112.

Le capteur 110 est donc suspendu dans le compartiment de stockage Sn de la nourriture, sans risque de contact avec les animaux A.

Dans le mode de réalisation représenté dans la figure 3, la cage 104 comprend un moyen de protection sensiblement vertical tel qu'une grille 164, séparé d'une cloison du bac par une distance suffisante pour ménager un espace de réception du capteur 110 et pour former un écran en définissant une distance de protection minimale déterminée D2 entre les animaux A et le capteur 110. Dans ce cas, le capteur 110 ne repose pas sur un support particulier comme dans les figures 2 et 3, mais repose sur le fond de la cage 104. Ainsi, le capteur 110 se trouve au sein de la cage 104 et protégé de tout contact avec les animaux A, sans risque d'être perturbé dans ses mesures ni dégradé ou endommagé par ceux-ci, et permet de mesurer précisément les conditions de confinement au plus près des animaux.

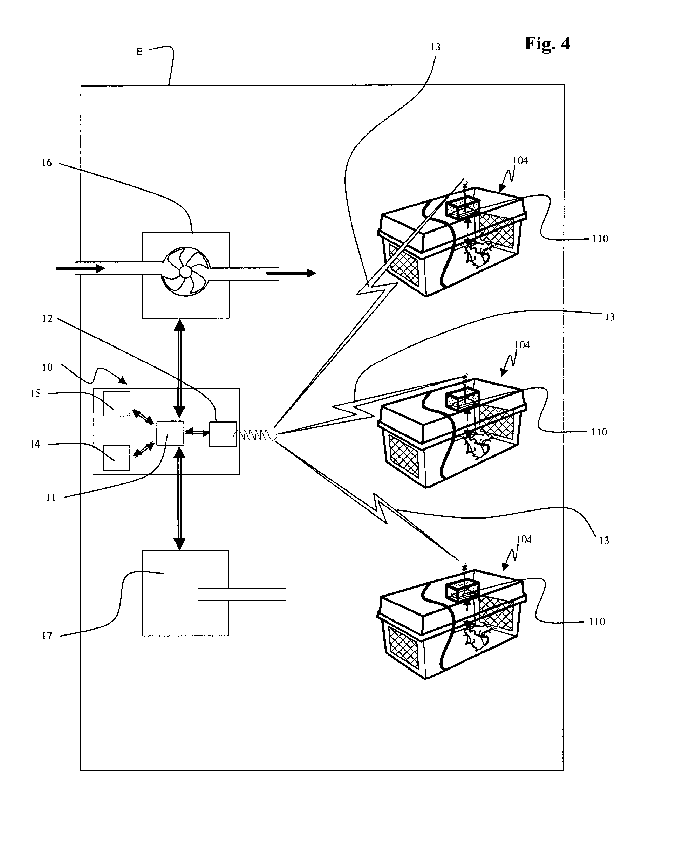

Les capteurs 110 précédemment décrits sont aptes à communiquer avec un moyen de commande 114 d'un système 10 de suivi des paramètres de confinement d'animaux de laboratoire en cage tel que représenté en figure 4.

Ce système 10 permet le suivi des paramètres de confinement d'animaux de laboratoire enfermés dans trois cages 104 entreposée dans un espace E. Le système 10 comprend un moyen de commande 11 relié à au moins un émetteur/récepteur 12, par exemple de type Wi-Fi, Bluetooth, infrarouge, ou NFC (pour « near field communication » ou communication en champ proche), pour établir une communication 13 avec chaque capteur 110 disposé dans chaque cage 104 et transmettre des mesures de conditions de confinement des animaux à une mémoire de stockage 14 de ces conditions de confinement.

Ainsi, il est possible de connaître avec précision les conditions de confinement subies au sein de chaque cage par les animaux. Si l'espace E est un moyen de transport, tel qu'un camion, un avion ou un bateau, la connaissance de ces conditions de confinement subies lors du transport permet d'appliquer un protocole d'acclimatation spécifique à chaque cage pendant leur transport de prévoir ainsi l'adaptation des conditions de confinement après le transport et ainsi, diminuer les pertes après transport.

La connaissance de ces conditions de confinement subies lors du transport permet d'appliquer un protocole de d'acclimatation spécifique à chaque cage après leur transport et de prévoir ainsi l'adaptation des conditions de confinement et ainsi, diminuer les pertes après transport.

A cette fin, le système de suivi 10 peut comprendre, en outre, un module (non représenté) d'analyse des valeurs des conditions de confinement mesurées effectivement subies par les animaux lors d'un transport.

Le système 10 de la figure 4 présente des perfectionnements qui permettent de contrôler les conditions de confinement en réponse aux mesures effectuées dans chaque cage par les capteurs 110.

Ainsi, le système 10 comprend, en outre, une mémoire de stockage 15 de valeurs seuil de conditions de confinement reliée au moyen de commande 11. Celui-ci peut être relié à une ou plusieurs alarmes (non représentées) de dépassement de valeur seuil pour qu'un utilisateur mette en marche un système de ventilation.

Préférentiellement, le moyen de commande 11 est apte à commander la mise en marche ou l'arrêt d'une pompe à air 16 lorsque des mesures communiquées par les capteurs 110 se trouvent en dessous ou au-dessus d'au moins une valeur seuil prédéfinie stockée dans la mémoire 15.

Autrement dit, lorsqu'un des capteurs 110 mesure, par exemple, un taux d'oxygène plus bas qu'une valeur seuil prédéfinie, le système 10 met en marche la pompe à air 16 pour renouveler l'air de la pièce et donc des cages. Ce système 10 adapte donc le nombre et la durée de renouvellement d'air en fonction des besoins ressentis par les animaux, et non de manière prédéterminée. Il assure ainsi la satisfaction des besoins des animaux tout en permettant d'économiser de l'énergie, un renouvellement d'air inutile n'étant pas commandé.

Le système 10 de la figure 4 comprenant, en outre, un humidificateur d'air et/ou un régulateur de température d'air 17 pour ajuster l'humidité et/ou la température de l'air en fonction de mesures communiquées par les capteurs 110 des cages 104.

La présente invention peut aussi être mise en oeuvre dans des installations plus complexes que sont les portoirs ventilés de cages hermétiques, généralement en matière plastique transparente. Ces cages peuvent être étanches à l'air et à l'humidité ou présenter une ouverture munie d'un filtre de type HEPA, et sont reliées à un système de ventilation d'air pulsé et expulsé par des buses de connexion.

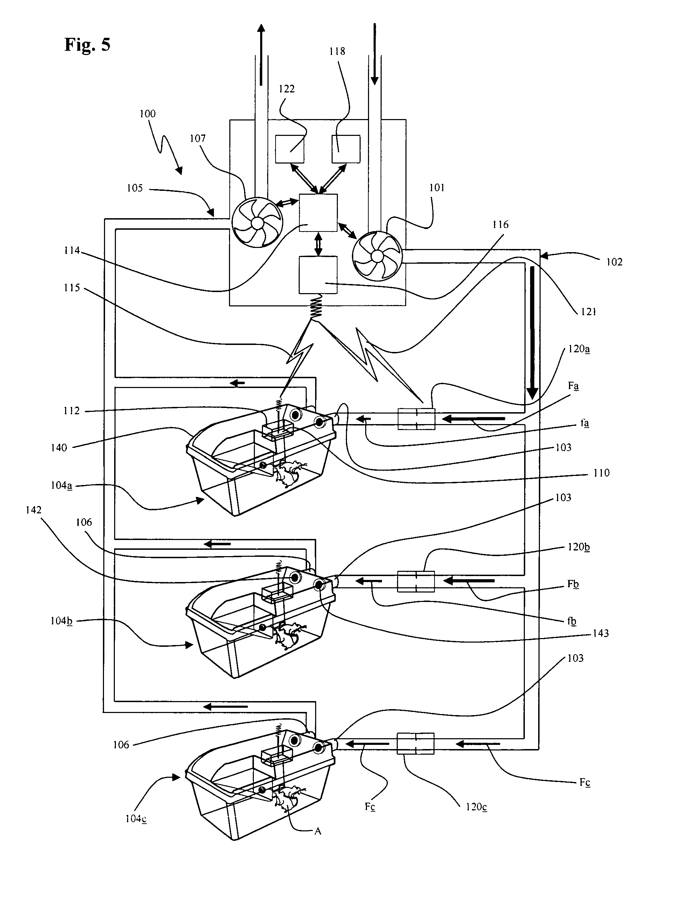

Un mode de réalisation d'un tel système de suivi 100 des paramètres de confinement d'animaux de laboratoire A en cage selon l'invention est représenté dans la figure 5.

Le système de suivi 100 comprend une pompe à air 101 connectée à un circuit d'air pulsé 102 muni de moyens de connexion 103 à trois cages 104a, 104b et 104c pour apporter de l'air dans chaque cage, et un circuit d'extraction d'air 105 muni de moyens de connexion 106 audites cages pour évacuer de l'air hors de ces cages.

Le couvercle 140 de chaque cage 104a, 104b et 104c est muni de prise de connexion 142 et 143 avec un moyen de connexion au circuit d'aération et, plus précisément, respectivement au circuit d'air pulsé 102 et au circuit d'extraction d'air 105.

Autrement dit, chaque cage 104a, 104b et 104c est connectée d'une part au circuit d'air pulsé et, d'autre part, au circuit d'évacuation d'air. Les moyens de connexion 103 et 106 sont donc en nombre identique. Bien évidemment, le système peut comprendre autant de cages que nécessaire. Dans le mode de réalisation représenté, le système 100 comprend une deuxième pompe à air 107 connectée au circuit d'extraction d'air 105 pour faciliter et mieux contrôler l'évacuation de l'air contenu dans les cages.

Chaque cage 104 (voir aussi les figures 1, 2 et 3) est munie d'un capteur 110 de conditions de confinement des animaux. Ces conditions peuvent être la température, l'hygrométrie, le niveau de gaz carbonique, le niveau d'oxygène, le niveau d'ammoniac (l'ammoniaque étant produit par les déjections des animaux), la pression dans la cage, le niveau de lumière, l'amplitude et la durée des mouvements subis par les cages (vibrations, mouvements brusques, etc.), le niveau sonore, le temps de transport, etc.

Le système 100 comprend en outre un moyen de commande 114, tel qu'un micro processeur, apte à établir une communication 115 avec chaque capteur 110 grâce à un émetteur/récepteur 116 de type Wi-Fi, Bluetooth, infrarouge, ou NFC.

Lorsque des mesures communiquées par les capteurs 110, représentatives de conditions de confinement effectivement subies par les animaux dans les cages, se trouvent en dessous ou au-dessus de valeurs seuil prédéfinies stockées dans une mémoire 118, le moyen de commande 114 commande la mise en marche ou l'arrêt des pompes à air 101 et 107.

Toutes les conditions de confinement ne peuvent pas être régulées, notamment lors du transport. Il en est ainsi, par exemple, de l'amplitude et de la durée des mouvements subis par les cages (vibrations, mouvements brusques, etc.), du niveau sonore, et du temps de transport.

Concernant les conditions de confinement pouvant être régulées, telles que la température, l'hygrométrie, le niveau de gaz carbonique, le niveau d'oxygène, le niveau d'ammoniac, la pression et le niveau de lumière, lorsqu'une mesure d'une cage se trouve au-delà d'une valeur seuil, le système commande automatiquement leur régulation en commandant, par exemple, le débit et la durée de fonctionnement des pompes à air.

Pour ce faire, un humidificateur d'air et/ou un régulateur de température d'air (non représentés sur la figure 1) peut/peuvent être connecté(s) à la pompe à air 101 pour ajuster l'humidité et/ou la température de l'air pulsé en fonction de mesures communiquées par les capteurs 110 des cages 104a, 104b et 104c.

Dans la suite de cette description, les exemples seront décrits pour la régulation du taux d'oxygène dans les cages, mais ces exemples s'appliquent aussi pour la régulation des autres variables réglables énumérées précédemment, sans que cette énumération soit exhaustive.

Dans un mode préféré de fonctionnement, le système de suivi 100 adapte automatiquement la quantité d'oxygène fournie à chaque cage en fonction de la valeur du taux mesurée dans chaque cage. Ces valeurs varient d'une cage à l'autre pour plusieurs raisons comme, notamment, le nombre d'animaux contenus ou la place de la cage par rapport au circuit d'aération (en effet, la cage 104c la plus éloignée de la pompe à air 101 reçoit un débit d'air inférieur à celui de la cage 104a qui en est la plus proche).

A cette fin, le système de suivi est muni de moyen de connexion 103 du circuit d'air pulsé 102 présentant un moyen d'obturation au moins partielle 120a, 120b et 120c de l'arrivée d'air, contrôlable par le moyen de commande 114, par exemple via une communication 121 par l'émetteur/récepteur 116, en fonction de mesures communiquées par le capteur de la cage 104a, 104b et 104c correspondant à chacun de ces moyens de connexion 120a, 120b et 120c. Le moyen de connexion doit être compris au sens large : il peut s'agir non seulement de la prise de connexion avec une cage, mais aussi de la partie de tuyauterie du circuit d'air pulsé ou expulsé individuelle pour chaque cage.

Dans un premier mode de réalisation préféré, les moyens de connexion 103 présentent chacun un moyen d'obturation au moins partielle, apte à obturer l'arrivée d'air selon un pourcentage d'obturation compris dans l'intervalle continu de 0 % à 100 %. Le pourcentage d'obturation de chaque moyen de connexion peut être réglé préalablement de façon manuelle, en fonction de la position allouée à chaque cage pendant le confinement, mais il est, de préférence, réglé automatiquement en fonction des mesures reçues par le moyen de contrôle.

Ainsi, le système reçoit plusieurs mesures de taux d'oxygène (préférentiellement autant de mesures que de cages). Il commande, alors, simultanément, la pompe à air 101 en fonction de la donnée de la cage 104c où le taux d'oxygène est le plus bas et d'autre part le degré d'obturation de chaque moyen d'obturation 120a, 120b et 120c pour que le débit d'air arrivant, représenté par les flèches Fa, Fb et Fc, soit adapté au besoin de chaque cage 104a, 104b et 104c.

Ainsi, à titre d'exemple, le moyen d'obturation 120a de la cage 104a où le taux d'oxygène est optimal est actionné pour obturer le moyen de connexion, par exemple, à 80 % pour laisser passer un débit d'air faible, représenté par la flèche fa. Le moyen d'obturation 120c de la cage 104c où le taux d'oxygène est critique est actionné pour ne pas obturer le moyen de connexion (obturation à 0 %), afin de laisser passer un débit d'air maximum, représenté par la flèche Fc identique au débit d'air d'arrivée. Enfin, le moyen d'obturation 120b de la cage 104b étant actionné pour obturer partiellement le moyen de connexion, par exemple à 30 %, en fonction du besoin de chaque cage.

Dans un autre mode de réalisation, les moyens d'obturation fonctionneraient en « tout ou rien » en fonction des mesures recueillies par le moyen de contrôle, c'est-à-dire que chaque moyen de connexion peut être obturé selon un pourcentage d'obturation choisi parmi 0 % et 100 %. Ainsi, le moyen de connexion 103 des cages qui présentent une valeur de taux d'oxygène supérieure à la valeur seuil est totalement obturé (obturation à 100 %) alors que celui des cages qui présentent une valeur de taux d'oxygène inférieure à la valeur seuil est totalement ouvert (obturation à 0 %).

Chaque mesure est effectuée à intervalle réduit et régulier pour qu'une cage présentant une valeur très légèrement supérieure à la valeur seuil à un moment t1 ne se trouve pas, par la suite, à un moment t2, en dessous de la valeur seuil pendant longtemps.

Dans tous les modes de réalisations décrits, lorsque les cages sont déconnectées du circuit d'aération, les moyens de connexion sont automatiquement obturés, mais lorsque les cages sont connectées au circuit d'aération, les moyens de connexion peuvent être soit totalement obturés, soit totalement ouverts, soit, éventuellement, partiellement obturés.

Le système de suivi des conditions de confinement selon l'invention est donc économe en énergie puisqu'une aération n'est commandée qu'en fonction des besoins réels des animaux et non à intervalles réguliers préprogrammés.

Concernant les conditions de confinement ne pouvant être régulées (principalement lors d'un transport), le système selon l'invention comprend une mémoire 122 pour stocker les mesures de conditions de confinement des animaux transmises par les capteurs 110 disposés dans chaque cage.

L'émetteur/récepteur 116 relié au moyen de commande reçoit les valeurs des conditions de confinement mesurées par les capteurs effectivement subies par les animaux et les transmet à la mémoire 122 pour stockage.

Le système selon l'invention est particulièrement bien adapté au transport d'animaux de laboratoire.

Pour faciliter la communication entre un système de suivi selon l'invention implanté dans un véhicule de transport, et un système de suivi selon l'invention, implanté dans un laboratoire, l'invention prévoit une interface de lecture/écriture, par exemple pour recevoir les conditions de transport voulues pour chaque cage transmises par l'utilisateur.

L'interface de lecture/écriture est en communication avec le moyen de commande 11, 114 et peut être, par exemple, un lecteur/enregistreur de carte à puce, un lecteur/enregistreur de carte magnétique, une prise USB, un lecteur/graveur de disque optique, un lecteur/enregistreur de disque ou de bande magnétique, un lecteur/imprimeur de code barre, un émetteur/récepteur NFC, un émetteur/récepteur infrarouge, un émetteur/récepteur WiFi, un émetteur/récepteur Bluetooth, etc.

Grâce à ce dispositif, un utilisateur d'un laboratoire d'expédition peut donc programmer à l'avance les conditions de confinement pendant le transport et remettre au transporteur, lors de la remise et de l'installation des cages, une carte programmée a insérer sans autre manipulation dans l'interface de lecture/écriture. La mémoire 15, 118 mémorise alors, via le moyen de commande 11, 114, les valeurs seuil auxquelles les valeurs mesurées par les capteurs doivent être comparées pour réguler les conditions de confinement.

Lorsque le véhicule de transport arrive au laboratoire récipiendaire, les cages sont transférées dans un système selon l'invention implanté dans le laboratoire, tel que représenté en figures 4 ou 5.

Le système selon l'invention permet d'accéder précisément aux valeurs des paramètres des conditions de confinement effectivement subies par ces animaux au cours du transport. Ainsi, les conditions de confinement mémorisées dans la mémoire 14, 122 pendant le transport sont récupérés via l'interface de lecture/écriture et servent à établir un protocole d'acclimatation des animaux. A cette fin, le système de suivi comprend un module (non représenté) d'analyse des valeurs des conditions de confinement mesurées, stockées dans la mémoire 14, 122, qui adapte les conditions de confinement dans le système de suivi du laboratoire pour mettre en oeuvre un protocole d'acclimatation approprié.

L'invention propose également de disposer à l'intérieur d'un véhicule de transport, un système de suivi des conditions de confinement tel que ceux décrits précédemment comme, par exemple, celui représenté dans la figure 4, et dans lequel les cages sont rangées sur un portoir rigide.

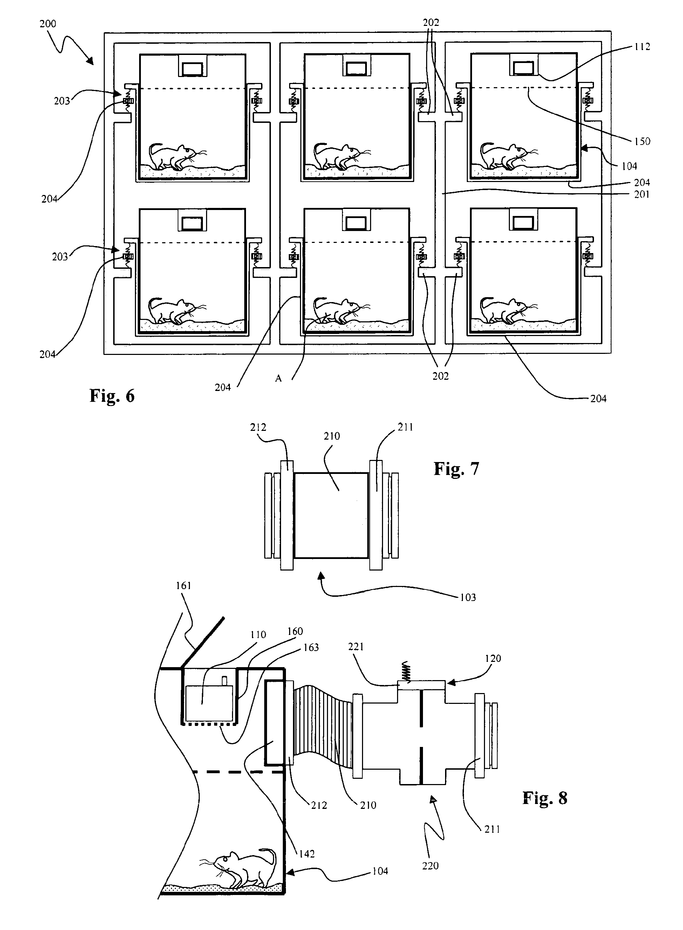

Un mode de réalisation d'un tel portoir 200 est illustré en figure 6. Il comporte des montants verticaux 201 munis de rebords de support 202 des cages 104.

Les rebords de support 202 du portoir 200 sont munis de moyens de suspension 203, schématisés dans cette figure 6 par un ressort, destinés à supporter les cages 104 de manière à les protéger de vibration induite par le transport. D'autres types de moyen de suspension peuvent, bien sûr, être interposés entre les rebords 202 et les cages 104.

Pour faciliter le rangement des cages dans ce portoir 200, l'invention propose, par exemple, d'interposer entre les cages un support 204 en U muni d'épaulements 205 d'appui sur les moyens de suspension. Ainsi, un utilisateur n'a qu'à glisser chaque cage dans un support 204 sans se préoccuper de l'agencement de la cage par rapport aux moyens de suspension.

Préférentiellement, les supports 204 sont munis de moyen de fixation pour maintenir chaque cage dans son support lors du transport.

Le nombre d'animaux contenus dans une cage peut amplifier les mouvements de la cage lors du transport, d'une part en raison du poids des animaux et, d'autre part, en raison du mouvement même des animaux.

Ainsi, dans un mode préféré de réalisation, les moyens de suspension 203 sont réglables par une molette 206 en fonction du poids de la cage. Il est ainsi possible d'adapter la suspension des cages en fonction des animaux contenus (animaux turbulents ou non) et de leur poids total.

Le portoir lui-même peut être monté sur des suspensions ou des supports pour absorber au moins une partie des vibrations que pourrait lui transmettre le véhicule de transport.

Un système de suivi tel que celui 100 représenté dans la figure 5, peut aussi être adapté au transport.

A cette fin, le portoir comprend un circuit d'air pulsé, un circuit d'extraction d'air et des moyens de connexion de ces circuits aux cages. Ces moyens de connexion permettent une circulation d'air maîtrisée dans la cage par l'intermédiaire des prises de connexion 142 et 143.

Chaque cage 104 est aussi isolée des vibrations du portoir 200 par des moyens de connexion 103-106 aux circuits d'air pulsé 102 et évacué 105 munis d'un moyen d'absorption de vibration.

Un mode de réalisation d'un tel moyen de connexion muni d'un moyen d'absorption de vibration est représenté en figure 7. Le moyen de connexion 103 comprend une portion de tube 210 souple et étanche, par exemple en polymère élastique, destinée à être fixée au circuit d'air par une prise rigide de connexion 211 et à la cage par une prise rigide de connexion 212. Ainsi, grâce au tube souple, les vibrations du véhicule, transmises au portoir rigide 200 et à la prise rigide de connexion 211, sont absorbées, au moins en partie, par la portion de tube souple de telle sorte que la prise rigide de connexion 212 ne vibre pas ou pratiquement pas.

La cage est ainsi isolée, au moins en partie, des vibrations ou des petits mouvements brusques entraînés par le mouvement du véhicule de transport.

La portion de tube souple peut être, par exemple, un tube ondulé en métal ou en matière plastique. Le nombre et l'amplitude des ondulations doivent être choisis pour donner au tube une souplesse suffisante pour amortir les vibrations.

Cependant, de tels tubes peuvent s'altérer rapidement avec le temps. Dans un mode préféré de réalisation, la portion de tube souple est un tuyau constitué par la combinaison d'un tube métallique ondulé recouvert d'une tresse claire, elle-même recouverte d'une gaine en polymère élastique tel que du néoprène, du PVC ou du caoutchouc. La synergie de ces matériaux permet d'obtenir un tuyau étanche et souple à durée de vie améliorée.

Le moyen de connexion 220 représenté en figure 8 est un perfectionnement du moyen de connexion 103 de la figure 7. Il comprend un moyen d'obturation réglable 120 de l'arrivée d'air, contrôlable par le moyen de commande 114 en fonction de mesures communiquées par le capteur de la cage 104. Le contrôle se fait par l'intermédiaire d'un émetteur/récepteur 221 qui reçoit un ordre d'ouverture ou de fermeture du moyen d'obturation par le moyen de commande 114 via l'émetteur/récepteur 116 (figure 5).

Le moyen d'obturation peut être choisi parmi les diaphragmes, les mécanismes à guillotine, ou les clapets. Un autre mode de réalisation consiste à utiliser un collier à serrage commandé en combinaison avec un tuyau suffisamment souple pour être déformé par le collier afin d'obtenir une obturation satisfaisante.

L'invention n'est pas limitée aux exemples décrits et représentés. Selon d'autres modes de réalisation de l'invention :
■ le couvercle de la cage est muni d'un logement pour un biberon adapté pour éviter les fuites ;
■ la cage est en matière plastique transparente ou translucide, d'une part, pour voir les animaux et, d'autre part, pour pouvoir régler l'intensité lumineuse qui règne dans la cage grâce à une lampe extérieure et individuelle à chaque cage, en fonction des mesures envoyées par le capteur 110 au moyen de commande 114. De cette façon, la lampe n'est pas endommagée par les animaux et ne risque pas de les blesser.
■ Lorsque la cage est équipée pour être connectée à un système d'aération, seule la face 163 sur laquelle repose le capteur 110 peut être constituée par un filtre, par exemple de type HEPA. De cette manière, le capteur est protégé du souffle direct de l'air pulsé par la prise de connexion 142.
■ pour régler la pression à l'intérieur des cages, il convient d'équiper les moyens de connexion au circuit d'évacuation d'air avec des moyens d'obturation réglables, d'actionner les pompes 101 et 107 et d'obturer l'entrée et la sortie d'air de chaque cage différemment pour augmenter ou diminuer la pression au sein de chaque cage ;
■ chaque capteur, en matériau propre à résister à l'autoclave ou à d'autres moyens physiques ou chimiques d'aseptisation, permet un lavage et une désinfection facilités de la cage, sans avoir à retirer les capteurs des cages ;
■ le système peut comprendre, à la place du ou des émetteurs/récepteurs, des connexions filaires entre le moyen de contrôle, les capteurs et/ou les moyens d'obturation ;
■ chaque capteur est pourvu de moyens magnétiques pour être maintenu contre une paroi de la cage par attraction magnétique en liaison avec son antenne, externe à la cage dans le cas de cage métallique (pour éviter l'effet « cage de Faraday »), la cage étant également pourvue de moyens magnétiques ;
■ la cage est de préférence en matériau non métallique, toujours pour l'effet « cage de Faraday » qui perturbe ou annule les communications entre les capteurs et les émetteurs/récepteurs du système de suivi des paramètres de confinement ;
■ le système peut comprendre une réserve d'alimentation électrique autonome telle que des batteries. Avantageusement, le système peut comprendre en outre une prise de connexion à une alimentation électrique (du local d'entrepôt ou du moyen de transport, tel qu'un avion, un camion, un train, etc.) permettant un fonctionnement des appareils électriques (pompes, moyen de commande, interface de lecture, etc.) directement, ou indirectement par l'intermédiaire des batteries. Plusieurs jeux de batterie peuvent également être embarqués afin de permettre une rotation de l'alimentation et de la recharge des batteries, en particulier pour les longs trajets.

## Revendications

1. Système de suivi des paramètres de confinement d'animaux de laboratoire enfermés dans au moins une cage, **caractérisé en ce qu'**il comprend un moyen de commande (11, 114) relié à au moins un émetteur/récepteur (12, 116) pour établir une communication (13, 115) avec au moins un capteur (110) disposé dans chaque cage et transmettre des mesures de conditions de confinement des animaux à au moins une mémoire de stockage de ces conditions de confinement (14, 122).

2. Système de suivi (10, 100) selon la revendication 1, comprenant une mémoire de stockage de valeurs seuil de conditions de confinement (15, 118).

3. Système de suivi (10, 100) selon la revendication 2, dans lequel le moyen de commande (11, 114) est relié en outre à au moins une alarme de dépassement de valeur seuil.

4. Système de suivi selon la revendication 2 ou 3, dans lequel le moyen de commande (11, 114) est apte à commander la mise en marche ou l'arrêt d'une pompe à air (16, 101, 107) lorsque des mesures communiquées par les capteurs (110) se trouvent en dessous ou au-dessus d'au moins une valeur seuil prédéfinie.

5. Système de suivi selon l'une quelconque des revendications 2 à 4, comprenant, en outre, un humidificateur d'air et/ou un régulateur de température d'air (17) pour ajuster l'humidité et/ou la température de l'air en fonction de mesures communiquées par les capteurs (110) des cages (104, 104a, 104b, 104c).

6. Système de suivi (100) selon l'une quelconque des revendications précédentes, muni d'un circuit d'aération comprenant au moins un circuit d'air pulsé (102) connecté à au moins une pompe à air (101) et pourvu d'au moins un moyen de connexion (103, 220) à au moins une cage selon la revendication 7 pour apporter de l'air dans chaque cage, et au moins un circuit d'extraction d'air (105) muni de moyens de connexion (106, 220) audites cages (104a, 104b, 104c) pour évacuer de l'air hors de ces cages, en nombre identique à celui des moyens de connexion (103, 220) du circuit d'air pulsé (102).

7. Système de suivi selon la revendications précédente, dans lequel au moins un moyen de connexion (103, 220) du circuit d'air pulsé présente un moyen d'obturation au moins partielle (120, 120a, 120b, 120c) de l'arrivée d'air contrôlable par le moyen de commande (114) en fonction de mesures communiquées par le capteur (110) de la cage (104a, 104b, 104c) correspondant à chacun de ces moyens de connexion.

8. Système de suivi selon l'une quelconque des revendications précédentes, dans lequel l'émetteur/récepteur (12, 116) est pris dans le groupe constitué par les émetteurs/récepteurs NFC, les émetteurs/récepteurs infrarouges, les émetteurs/récepteurs WiFi, et les émetteurs/récepteurs Bluetooth.

9. Système de suivi selon l'une quelconque des revendications précédentes, comprenant en outre au moins une interface de lecture/écriture reliée au moyen de commande (11, 114) pour transmettre les valeurs des conditions de confinement mesurées effectivement subies par les animaux à la mémoire de stockage (14, 122) des ces valeurs.

10. Système de suivi selon la revendication 9 en combinaison avec la revendication 2, dans lequel l'interface de lecture/écriture reçoit des valeurs seuil relatives à des conditions de confinement à maintenir lors du stockage et/ou du transport et les transmet via le moyen de commande (11, 114) à la mémoire de stockage (15, 118) des valeurs seuil.

11. Système de suivi selon la revendication 9 ou 10, dans lequel l'interface de lecture/écriture est prise dans le groupe constitué par les lecteurs/enregistreurs de carte à puce, les lecteurs/enregistreurs de carte magnétique, les prises USB, les lecteurs/enregistreurs de disque optique, les lecteurs/enregistreurs de disque magnétique, les lecteurs/imprimeurs de code barre, les émetteurs/récepteurs NFC, les émetteurs/récepteurs infrarouges, les émetteurs/récepteurs WiFi, et les émetteurs/récepteurs Bluetooth.

12. Système de suivi selon l'une quelconque des revendications précédentes, adapté au transport d'animaux de laboratoire, comprenant en outre au moins un module d'analyse des valeurs des conditions de confinement mesurées effectivement subies par les animaux lors d'un transport apte à adapter les conditions de confinement de stockage après le transport.

13. Système de suivi selon l'une quelconque des revendications précédentes, adapté au transport d'animaux de laboratoire, comprenant en outre un portoir rigide (200) muni de moyens de suspension (203) destinés à supporter les cages (104) de manière à les protéger de vibration induite par le transport.

14. Système de suivi selon la revendication précédente, dans lequel les moyens de suspension (203) sont réglables en fonction du poids de la cage (104).

15. Système de suivi selon la revendication 13 en combinaison avec la revendication 6 ou 7, dans lequel chaque moyen de connexion (103, 106, 220) des circuits d'air pulsé (102) et évacué (105) aux cages (104) est muni d'un moyen d'absorption (210) de vibration.

16. Système de suivi selon la revendication précédente, dans lequel au moins un moyen de connexion des circuits d'air pulsé (102) et évacué (105) aux cages (104) comprend une portion de tube souple étanche (210) fixée à une prise rigide (211) de connexion au circuit d'air et à une prise rigide (212) de connexion à la cage (104).

17. Système de suivi selon la revendication précédente, dans lequel la portion de tube souple (210) est prise dans le groupe constitué par un tube ondulé, un tube en polymère élastique sensiblement étanche, et un tuyau constitué par la combinaison d'un tube métallique ondulé recouvert d'une tresse claire, elle-même recouverte d'une gaine en polymère élastique tel que du néoprène, du PVC ou du caoutchouc.

18. Cage de confinement (104, 104a, 104b, 104c) d'animaux de laboratoire (A), comprenant un bac (130) et un couvercle (140), adaptée à un système selon l'une quelconque des revendications précédentes, **caractérisée en ce qu'**elle comprend en outre un moyen de protection (112, 150, 164) d'au moins un capteur (110), ce moyen étant agencé pour définir une distance de protection minimale (D, D1, D2) entre les animaux (A) et le capteur (110) afin d'empêcher toute perturbation des mesures ou dégradation du capteur.

19. Cage de confinement (104, 104a, 104b, 104c) selon la revendication précédente, comprenant un support (112) destiné à recevoir le capteur (110) et agencé pour que le capteur (110) soit à une distance de protection minimale déterminée (D, D1) des animaux (A) contenus dans la cage (104, 104a, 104b, 104c) et protégé de tout contact avec eux.

20. Cage de confinement (104, 104a, 104b, 104c) selon la revendication précédente, comprenant un compartiment de stockage (Sa) des animaux et un compartiment de stockage (Sn) de la nourriture séparé du compartiment de stockage (Sa) des animaux par une grille (150), et dans laquelle le capteur (110) est maintenu en suspension dans le compartiment de stockage (Sn) de la nourriture.

21. Cage de confinement (104, 104a, 104b, 104c) selon la revendication 19 ou 20, dans laquelle le support (112) est séparé de l'air extérieur par un sas agencé pour isoler l'air contenu dans la cage (104, 104a, 104b, 104c) de l'air extérieur lors de l'introduction ou du retrait du capteur (110) dans ou hors du support (112).

22. Cage de confinement (104, 104a, 104b, 104c) selon l'une quelconque des revendications 19 à 21, dans laquelle le support (112) comprend un réceptacle creux comprenant un filtre, par exemple de type HEPA (162, 163), et un moyen de fermeture du réceptacle (161).

23. Cage de confinement (104, 104a, 104b, 104c) selon la revendication 18, comprenant une grille (150) agencée pour que le capteur (110) soit à une distance de protection minimale déterminée (D2) des animaux (A) contenus dans la cage (104, 104a, 104b, 104c) et protégé de tout contact avec eux.

24. Cage de confinement (104a, 104b, 104c) selon l'une quelconque des revendications 18 à 23, dans laquelle le couvercle (140) est muni de prises (142, 143) de connexion avec un moyen de connexion (103, 220) à un circuit d'aération (101-102-105-107).

25. Cage de confinement selon l'une quelconque des revendications 18 à 24, dans lequel chaque capteur (110) est en matériau propre à résister à des moyens physiques ou chimiques d'aseptisation.
